# EUROPÄISCHE PATENTSCHRIFT

(11) **EP 1 232 041 B1**
(45) Veröffentlichungstag und Bekanntmachung des Hinweises auf die Patenterteilung: **21.05.2003**
(21) Anmeldenummer: 00975960.6
(22) Anmeldetag: 30.10.2000
(51) Int. Cl.: B24B 13/005, G02C 13/00

(54) **HALTER FÜR EINEN BLOCK ODER SAUGER**
RETAINING DEVICE FOR A BLOCK OR SUCTION ELEMENT
DISPOSITIF DE MAINTIEN POUR UN BLOC OU UN ELEMENT ASPIRANT

(30) Priorität: 15.11.1999 DE 19954761
(43) Veröffentlichungstag der Anmeldung: 21.08.2002
(73) Patentinhaber: Wernicke & Co. GmbH, 40231 Düsseldorf (DE)
(72) Erfinder: WERNER, Ralf, 40721 Hilden (DE); KÖTTING, Fritz, 41541 Dormagen (DE)
(74) Vertreter: Rehders, Jochen
(86) Internationale Anmeldenummer: EP0010666
(87) Internationale Veröffentlichungsnummer: WO01036155

(56) Entgegenhaltungen:
- DE-A- 2 245 841
- DE-A- 2 621 891
- DE-A- 4 230 610
- FR-A- 2 226 824
- US-A- 4 118 898

## Beschreibung

Die Erfindung betrifft einen Halter für einen Block oder Sauger in einer Zentriervorrichtung für Brillengläser mit einem Träger, der eine Längsachse aufweist, einer kugelkalottenförmigen Lagerfläche am Träger, einer mittels Lenkern am Träger gelagerten, zur Lagerfläche komplementären Kugelkalotte, einer Aufnahme in der Kugelkalotte, die als Gußform zum Angießen eines Blocks an das Brillenglas dient, mit einer Anlagefläche für ein Rohglas und einem Radius R der Lagerfläche und der Kugelkalotte, dessen Mittelpunkt M in der Längsachse des Trägers auf der Anlagefläche für das Rohglas liegt. Ein derartiger Halter ist in der DE-AS 2 245 841 beschrieben.

Zentriervorrichtungen für Brillengläser dienen dazu, einen Block oder Sauger um den Wert der Dezentration desaxiert auf einer Oberfläche, in der Regel der konvexen Vorderseite eines Rohglases, winkelgerecht anzubringen, wonach das Rohglas mittels des Blocks oder Saugers winkelgerecht in eine Brillenglashaltewelle einer Brillenglasrandschleifmaschine eingesetzt und dessen Rand entsprechend der vorgegebenen Form einer Brillenfassung bearbeitet wird.

Bei einer weiteren bekannten, im Handel erhältlichen Zentriervorrichtung wird ein Rohglas zum Bestimmen seiner optischen Eigenschaften bezüglich seiner geometrischen Achse zentriert und bezüglich seiner konvexen Vorderseite senkrecht zur Betrachtungsachse ausgerichtet. Anschließend wird durch das Rohglas ein Kreuzlinienraster hindurchprojiziert, und das entsprechend den optischen Eigenschaften des Rohglases verzerrte Bild des Kreuzlinienrasters wird von einer Kamera aufgenommen und zur Berechnung der optischen Eigenschaften des Rohglases verwendet, da zwischen dem verzerrten Bild des Kreuzlinienrasters und den optischen Eigenschaften des Rohglases eine eindeutige mathematische Beziehung besteht. Aufgrund der Bildanalyse ergibt sich für das in die Zentriervorrichtung ohne winkelmäßige Ausrichtung eingelegte Rohglas auch die Achsenlage eines zylindrischen oder prismatischen Schliffs oder die Lage eines Nahteils, durch die die Winkellage eines auf das Rohglas aufzusetzenden Blocks oder Saugers zusätzlich zur vorgegebenen Dezentration bestimmt ist.

Nachdem diese Parameter ermittelt sind, wird eine Vorrichtung zum Aufsetzen des Blocks oder Saugers auf die Rohglasoberfläche hinsichtlich der Winkellage und der Dezentration angesteuert und der Block oder Sauger an dem vorgegebenen Punkt der Rohglasoberfläche winkelgerecht befestigt.

Aufgrund der in der Regel bezüglich der optischen Achse des Rohglases desaxierten Befestigung des Blocks oder Saugers ergibt sich auf der konvexen Oberfläche des Rohglases eine Schieflage des Blocks oder Saugers, die die Genauigkeit der Positionierung des Blocks oder Saugers beeinträchtigt.

Dementsprechend liegt der Erfindung das Problem zugrunde, einen Halter für einen Block oder Sauger in einer Zentriervorrichtung für Brillengläser zu schaffen, mit dem sich ein Block oder Sauger hochgenau und winkelgerecht auf eine optische Oberfläche eines Rohglases für die anschließende Randbearbeitung aufsetzen und befestigen läßt.

Ausgehend von dieser Problemstellung wird bei einem Halter für einen Block oder Sauger in einer Zentriervorrichtung für Brillengläser nach dem Oberbegriff des Anspruchs 1 erfindungsgemäß eine kardanische Lagerung der Kugelkalotte am Träger mittels einer senkrecht zur Längsachse im Träger verlaufenden ersten Schlitzführung für einen Gleitstein und einer weiteren, zur ersten Schlitzführung senkrecht verlaufenden zweiten Schlitzführung in der Kugelkalotte für einen zweiten Gleitstein, wobei die Gleitsteine eine undrehbare Verbindung der Kugelkalotte mit dem Träger bilden, vorgeschlagen.

Durch diese Anordnung bleibt der Mittelpunkt des Blocks oder Saugers stets in der Längsachse des Trägers, unabhängig von der jeweiligen Schieflage des Blocks oder Saugers und unabhängig von der Winkelstellung des Trägers mit Bezug auf den Verlauf der Achse eines zylindrischen oder prismatischen Schliffs oder der Lage eines Nahteils.

Durch die undrehbare Verbindung und Einrichtungen in der Aufnahme in der Kugelkalotte zum winkelgerechten Halten eines Blocks oder Saugers läßt sich der Block oder Sauger durch Drehen des Trägers mit einem vorgebbaren Winkel bezüglich des Rohglases auf dessen optische Oberfläche aufsetzen.

Zum automatischen Positionieren und winkelgerechten Aufsetzen des Blocks oder Saugers auf das Rohglas kann der Träger in der Zentriervorrichtung angetrieben drehbar und in alle Richtungen senkrecht zu seiner Achse angetrieben verschiebbar angeordnet sein.

Die Erfindung wird nachstehend anhand eines in der Zeichnung dargestellten Ausführungsbeispiels des näheren erläutert. In der Zeichnung zeigen:

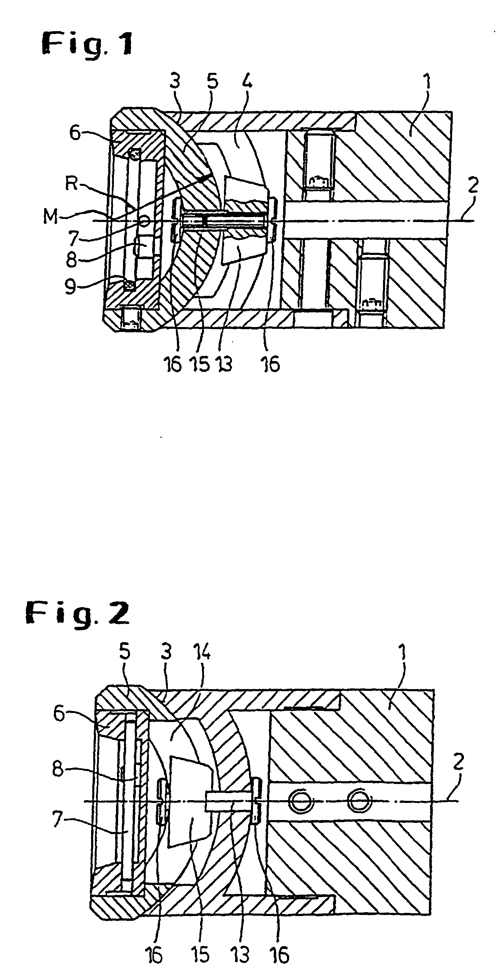

- Fig. 1: einen Längsschnitt durch den erfindungsgemäßen Halter,
- Fig. 2: einen um 90° gegenüber der Darstellung in Fig. 1 gedrehten Längsschnitt durch den erfindungsgemäßen Halter und
- Fig. 3: einen erfindungsgemäßen Halter im Längsschnitt mit eingesetztem Block oder Sauger und einer Darstellung des Aufsetzens auf ein Rohglas.

Von einer Zentriervorrichtung für Brillengläser ist nur ein Halter 1 dargestellt, der um eine Längsachse 2 gesteuert angetrieben drehbar und senkrecht zu dieser Längsachse 2 in alle Richtungen angetrieben gesteuert verschiebbar ist. Der Träger weist an seinem einen Ende eine kugelkalottenförmige Ringlagerfläche 3 auf und ist in seinem Inneren mit einer ersten Schlitzführung 4 versehen, die senkrecht zur Längsachse 2 verläuft. An der Lagerfläche 3 liegt eine zur Lagerfläche komplementäre Kugelkalotte 5 an, die mit einer Aufnahme 6 für einen Block oder Sauger 10 versehen ist.

Zur winkelgerechten Aufnahme des Blocks oder Saugers 10 ist die Aufnahme 6 mit einem quer zur Achse 2 verlaufenden Stift 7 und einem dazu parallel und desaxiert angeordneten Zapfen 8 versehen. Der Block oder Sauger 10 weist entsprechende, komplementäre Ausnehmungen auf, so daß er sich nur in einer definierten Winkellage in die Aufnahme 6 einsetzen läßt. Der Block oder Sauger 10 wird mittels eines O-Rings 9 in der Aufnahme 6 klemmend gehalten. Der Block oder Sauger 10 weist eine Anlagefläche 11 für ein Rohglas 12 auf, die entweder mit einer Klebefolie versehen ist, so daß das Rohglas 12 beim Aufsetzen des Blocks oder Saugers 10 klebend haftet, oder der Block oder Sauger ist so elastisch verformbar, daß er saugend an der Oberfläche des Rohglases 12 haftet.

Ein Gleitstein 13 ist in der Schlitzführung 4 geführt und mit einem zweiten, dazu senkrecht angeordneten Gleitstein 15 durch eine Schraubverbindung 16 undrehbar verbunden. Der zweite Gleitstein 15 ist in einer zweiten Schlitzführung 14 in der Kugelkalotte 5 geführt, wodurch eine bezüglich des Trägers 1 undrehbare, kardanische Lagerung der Kugelkalotte 5 gegeben ist.

Der Radius R der kugelkalottenförmigen Lagerfläche 3 und der Kugelkalotte 5 ist so bemessen, daß sein Mittelpunkt M in der Längsachse 2 des Trägers 1 auf der Anlagefläche 11 für das Rohglas 12 liegt.

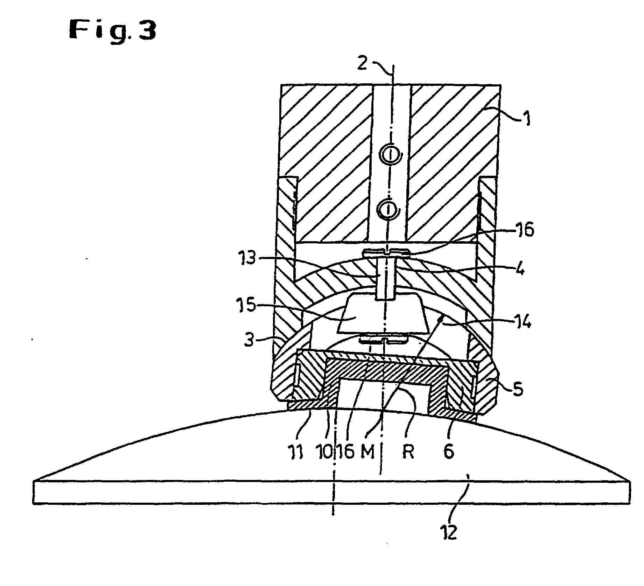

Hierdurch ist, wie in Fig. 3 ersichtlich, gewährleistet, daß der Auflagemittelpunkt des Blocks oder Saugers 10, unabhängig von seiner Winkellage, stets genau auf der Längsachse 2 auf der Oberflache des Rohglases 12 liegt, so daß durch eine etwaige Schräglage des Blocks oder Saugers 10 keine Ungenauigkeiten beim Aufsetzen und Befestigen des Blocks oder Saugers 10 entstehen können.

## Patentansprüche

1. Halter für einen Block oder Sauger (10) einer Zentriervorrichtung für Brillengläser mit
- einem Träger (1), der eine Längsachse (2) aufweist,
- einer kugelkalottenförmigen Lagerfläche (3) am Träger (1),
- einer am Träger (1) gelagerten, zur Lagerfläche (3) komplementären Kugelkalotte (5),
- einer Aufnahme (6) in der Kugelkalotte (5) für den Block oder Sauger (10) mit einer Anlagefläche (11) für ein Rohglas (12) und
- einem Radius (R) der Lagerfläche (3) und der Kugelkalotte (5), dessen Mittelpunkt (M) in der Längsachse (2) des Trägers (1) auf der Anlagefläche (11) für das Rohglas (12) liegt,
**gekennzeichnet durch** eine kardanische Lagerung der Kugelkalotte (3) am Träger (I) mittels einer senkrecht zur Längsachse (2) im Träger (1) verlaufenden ersten Schlitzführung (4) für einen Gleitstein (13) und einer weiteren, zur ersten Schlitzführung (4) senkrecht verlaufenden zweiten Schlitzführung (14) in der Kugelkalotte (5) für einen zweiten Gleitstein (15), wobei die Gleitsteine (13, 15) eine undrehbare Verbindung der Kugelkalotte (5) mit dem Träger (1) bilden.

2. Halter nach Anspruch 1, bei dem die Aufnahme (6) in der Kugelkalotte (5) Einrichtungen (7, 8) zum winkelgerechten Halten eines Blocks oder Saugers (10) aufweist.

3. Halter nach Anspruch 1 oder 2, bei dem der Träger (1) in der Zentriervorrichtung gesteuert angetrieben drehbar und in alle Richtungen senkrecht zu seiner Achse (2) angetrieben verschiebbar angeordnet ist.

## Claims

1. A holder for a block or suction element (10) of a centring device for spectacle lenses, comprising:
- a support (1) which has a longitudinal axis (2),
- a bearing surface (3) on the support (1) in the form of a spherical cup,
- a spherical cup (5) mounted on the support (1) and complementary to the bearing surface (3),
- a receiving means (6) in the spherical cup (5) for the block or suction element (10), comprising a bearing surface (11) for a lens blank (12), and
- a radius (R) of the bearing surface (3) and the spherical cup (5), the centre point (M) of which lies in the longitudinal axis (2) of the support (1) on the bearing surface (11) for the lens blank (12),
**characterised by** a universal-joint-type mounting of the spherical cup (3) on the support (1) by means of a first slot guide (4) for a sliding block (13) extending at right-angles to the longitudinal axis (2) in the support (1) and a further second slot guide (14) extending at right-angles to the first slot guide (4) in the spherical cup (5) for a second sliding block (15), the sliding blocks (13, 15) forming a non-turnable connection of the spherical cup (5) with the support (1).

2. A holder according to Claim 1, in which the receiving means (6) in the spherical cup (5) has means (7, 8) for holding a block or suction element (10) at the correct angle.

3. A holder according to Claim 1 or 2, in which the support (1) is rotatable, driven in controlled manner, in the centring device and is arranged displaceably in all directions driven at right-angles to its axis (2).

## Revendications

1. Support pour un bloc ou une ventouse (10) d'un dispositif de centrage pour verres de lunettes comportant
- un support (1) qui présente un axe longitudinal (2),
- une surface de support (3) en forme de calotte sphérique sur le support (1),
- une calotte sphérique (5) complémentaire à la surface de support (3) et montée sur le support (1),
- un logement (6) dans la calotte sphérique (5) pour le bloc ou la ventouse (10) avec une surface de contact (11) pour une ébauche de verre (12), et
- un rayon (R) de la surface de support (3) et de la calotte sphérique (5) dont le centre (M) se situe dans l'axe longitudinal (2) du support (1) sur la surface de contact (11) pour l'ébauche de verre (2),
**caractérisé par** un support à joint de cardan de la calotte sphérique (3) sur le support (3) au moyen d'un premier guide à fente (4) s'étendant perpendiculairement à l'axe longitudinal (2) dans le support (1), pour un coulisseau (13) et un deuxième guide à fente (14) supplémentaire, s'étendant perpendiculairement au premier guide à fente (4), dans la calotte sphérique (5), pour un deuxième coulisseau (15), les coulisseaux (13, 15) formant une liaison non rotative de la calotte sphérique (5) avec le support (1).

2. Support selon la revendication 1, dans lequel le logement (6) dans la calotte sphérique (5) comporte des dispositifs (7, 8) pour maintenir dans une position angulaire correcte un bloc ou une ventouse (10).

3. Support selon la revendication 1 ou 2, dans lequel le support (1) est entraîné en rotation, de manière commandée, dans le dispositif de centrage et est entraîné à coulissement dans toutes les directions perpendiculairement à son axe (2).
